# EUROPEAN PATENT SPECIFICATION

(11) **EP 4 321 065 B1**
(45) Date of publication and mention of the grant of the patent: **04.06.2025**
(21) Application number: 23189689.5
(22) Date of filing: 04.08.2023
(51) Int. Cl.: A47J 31/36, A47F 1/08

(54) **MAGNETIC DROP-DOWN PODS DISPENSER**
SPENDER FÜR MAGNETISCHE HERUNTERKLAPPBARE HÜLSEN
DISTRIBUTEUR DE CAPSULES DE CHUTE MAGNÉTIQUE

(30) Priority: 10.08.2022 IT 202200017136
(43) Date of publication of application: 14.02.2024
(73) Proprietor: Della Rosa, Fabio, 00013 Fonte Nuova (RM) (IT)
(72) Inventor: Della Rosa, Fabio, 00013 Fonte Nuova (RM) (IT)
(74) Representative: Fezzardi, Antonio

(56) References cited:
- WO-A1-2019/227850
- DE-U1- 202006 009 226
- US-A1- 2002 031 588
- US-A1- 2014 305 962

## Description

### Technical Field

The invention relates to an innovative dispenser suitable to contain 10 pods of different sizes therein, advantageously binding with the commercial container of said pods, for the purpose of preserving the information of each type of pods used; the present system proves to be modular with other dispensers of the same type by exploiting a plurality of magnets.

### Background art

A coffee pod is a small rigid container made of aluminum or plastic or similar material, containing coffee. This is the most common form of portioned coffee. A capsule differs from a pod in that the latter is made up of a non-rigid paper filter.

capsules have recently become popular in Italy and have achieved a great commercial success, due to the low cost of coffee machines, the ease of use and the practicality of the packaging. Among the disadvantages, there are the rather high price of the capsules and the almost complete incompatibility of the various systems on the market.

Preserving said pods is also a relevant issue, since most families purchase numerous pods of different types. Currently, the prior art does not provide a solution for storing and preserving pods; none of the proposed solutions is capable of optimizing space while facilitating the choice of the pod which the person concerned would like to have.

The large variety of blends produced for pods of all compatibility standards suggests the need to use dispensers or containers for pods which keep them separate and recognisable.

The types of dispensers and containers currently on the market may only provide and dispense pods of the same type. Therefore, while maintaining the same geometric size, each dispenser is suitable to contain only one type of pod, characterised by a specific geometric size.

Inside said dispensers, the number of pods contained and the arrangement thereof depends on the rigid constructive geometry thereof, which determines the exclusive use of a single type of dispenser.

This implies that, if a family starts using a new type of pod, due to taste or due to a new coffee machine, the old dispenser would no longer be usable given the incorrect and non-modifiable size.

The continuous use of dispensers of pods with a rigid and fixed size is therefore a waste of materials and resources, since at the slightest change in the size of said pods each dispenser should be replaced with a dispenser of a different size, fittable to the new pods.

Another aspect which makes all dispensers obsolete in the current state of the art is the need to be exclusively used on a horizontal plane. such need causes obvious obstacles in kitchens which, in most cases, are not characterized by large spaces on worktops.

To date, only two known models of dispensers, one static and one with a revolving base, are suitable to be bound to the original commercial packaging of the pods; said dispenser/packaging combination reduces the issues associated with the periodic replenishment of pods, promoting the complete replacement of the commercial packaging.

However, said dispensers fulfill, by all means, the function of containers for said commercial packaging. The latter, in fact, remaining partially or completely contained, lose the function of container and the legibility thereof.

Moreover, said dispensers are bulky and not very versatile, in the case it were necessary to change the brand of pods again, thus using a different commercial packaging.

Even patent WO2019227850, published on December 5, 2019, does not solve the issues highlighted above, since it describes a storage system for coffee pods which may be easily removed during the preparation of the coffee, directly from the machine. said invention is in fact bulky and invasive within a confined domestic context.

It is therefore the object of the patent to reveal a dispenser which may contain pods of different sizes and types therein, thus varying the geometric size thereof, and being advantageously ergonomic in most kitchens.

### Description of the invention

According to the present invention, a magnetic drop-down pods dispenser is provided which effectively solves the issues complained above.

The magnetic drop-down dispenser is adapted to dispense, one at a time, the plurality of pods contained within the commercial container thereof.

The dispenser consists of a support, which is suitable to engage inside a generic container.

said support comprises a frame and a tray installed below. The frame, having an adjustable size due to suitable sub-frames, is suitable to engage inside any commercial container of pods, thus facilitating the distribution thereof.

said pods are therefore adapted to fall, by gravity, from the container to the tray, thus facilitating the extraction of one pod at a time.

The project of the dispenser of the invention, in particular of both fixed and adjustable components, was studied to optimise the use of material and the construction of the mold itself, being producible with a simple injection mold with two shells, operating along a single axis, both in the case of plastic and aluminum molding.

The design of the dispenser involves using the commercial container, suitable to contain the plurality of pods vertically stacked therein. said container, if in one embodiment thereof is not of the commercial type, it is made of a recycled plastic material such as polyethylene terephthalate (PET) for the purpose of maintaining a low environmental impact during industrial production, further facilitating the view inside said dispenser due to the characteristic transparency of polyethylene terephthalate.

At least one frame is suitable for engaging within the lower section of the vertically stacked container, thereby conferring the function of a structural element to said commercial container of pods, and thus extending the life of the packaging; said frame is composed of a sliding sub-frame and a fixed sub-frame, for the purpose of offering a dimensional range to contain, within said dispenser, pods of different sizes, thus determining the lower internal section of the dispenser; said fixed sub-frame further comprises a male rail suitable to facilitate the distancing of said tray from the frame.

In one embodiment thereof, said frame comprises arched sides to optimise the transit of the pods and, to increase the stability of the coupling between the container and the support, a further perimeter step is used outside said frame, for the purpose of determining the portion of the frame which is suitable to overlap inside the container itself.

By way of non-limiting example, said frame is fixed, i.e., it is adapted to simply maintain the size thereof, thus facilitating the manufacturing steps during industrial production.

A tray is installed inferiorly and is axially corresponding to said frame, for the purpose of supporting the weight of the pods stacked above, facilitating the exposure of the lowest pod and allowing its removal for use; said tray comprises raised sides, suitable to prevent the pods from rolling outwardly; said tray further comprising a female rail, suitable to match with a male rail installed on said fixed sub-frame, in order to modify the distance of said tray from said frame.

To connect said tray with said frame, consequently determining the distance between said tray and said frame, a stem is used.

said stem is suitable to be adjustable since it is composed of a male rail and a female rail suitable to mutually slide on each other. By way of non-limiting example, the length of said stem is suitable to be modified by using a threaded joint, arranged inside the walls of said stem, and being suitable to be unscrewed or screwed in, consequently modifying the length of said stem; alternatively, the length of said stem is determined by the length chosen by the user, exploiting the telescopic structure of said stem which is suitable to comprise at least two external walls overlapping each other.

A plurality of magnets are installed at the rear of said stem so as to bind the entire dispenser of the invention, to any vertical metal surface, thereby optimising the space requirement and further offering the possibility of modulating the present dispenser with a plurality of other dispensers of the same type.

A chamfer, installed in the lower part of said tray, facilitates the detachment of said magnets following a slight inclination of the dispenser.

By way of non-limiting example, the distance between said sliding sub-frame and said fixed sub-frame is adjusted by means of two male rails comprising one bending tooth each, these rails, upon assembly, click on the corresponding end teeth brought on the female rails, preventing the complete removal of the sliding sub-frame. In addition thereto, the distance between said sliding sub-frame and said fixed sub-frame is facilitated by a pair of springs installed inside the rails of the fixed sub-frame, for the purpose of moving the sliding sub-frame away from the fixed sub-frame, thus ensuring a sufficient volume for the sliding of pods of different sizes and a stable engagement of the holder in containers of different sizes.

The advantages offered by the present invention are evident in light of the description given up to now and will be even clearer thanks to the accompanying Figures and the detailed description.

### Description of the Figures

The invention will be described hereinafter in at least one preferred embodiment by way of non-limiting example with the aid of the accompanying Figures, in which:

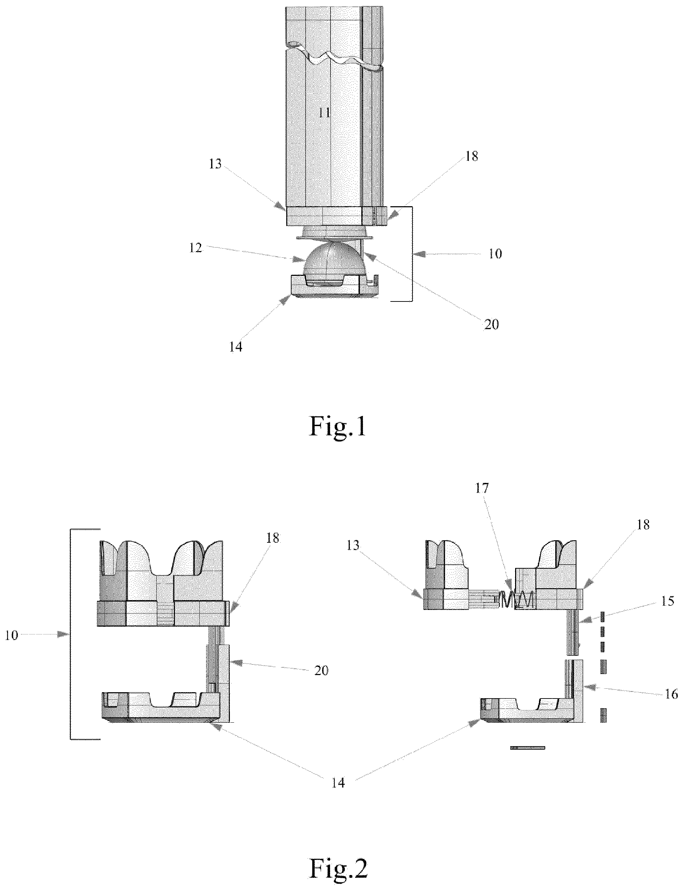

- FIGURE 1 shows the external perspective view of the magnetic drop-down pods dispenser 12 described in the present patent application.

The container 11 in which the pods 12 are vertically stacked is shown; the container provides a drop channel which allows a practical distribution of said pods 12.

Below said container 11 there is a support 10, which comprises a sliding sub-frame 13 and a fixed sub-frame 18.

The collaboration of said sub-frames 13, 18 allows to adapt the volume of the internal section of the frame 13, 18 to the sizes of the contained pods 12.

The dispensed pods 12 are deposited on a tray 14 for collection. said tray 14 is connected to said frame 13, 18 by means of a stem 20.
- FIGURE 2 shows the support 10 belonging to the magnetic drop-down pods dispenser 12 of the invention.

said support 10 is composed of a fixed sub-frame 18 and a sliding sub-frame 13, which are suitable, by means of generic rails, to increase and decrease the internal section of said support 10, thus facilitating the release of pods 12 from said container 11, as well as ensuring a stable engagement of the support 10 in the containers 11 of a different size.

The adjustment of the internal section of the frame 13, 18 is essential when pods 12 with different size and containers of different size are used.

A pair of springs 17 is suitable to facilitate the sliding of said sliding sub-frame 13.

Finally, below said sub-frames 13, 18, a tray 14 is installed which is suitable to dispense the lower pod 12 of the vertical pile formed above.

In order to allow pods 12 of different sizes to be correctly dispensed, said tray 14 is suitable to be moved away from said frame 13, 18 by means of at least one stem 20, adjustable by means of a female rail 16, installed behind said tray 14.

said female rail 16 is suitable to engage with a male rail 15 installed at the rear of said fixed sub-frame 18.

### Detailed description of the invention

The present invention will now be described purely by way of non-limiting or binding example, resorting to the Figures which show some embodiments in relation to the present inventive concept.

with reference to Figure 1, the external and perspective view of the magnetic dispenser of pods 12 object of the invention is described.

The support 10 is suitable to engage with a generic commercial container 11, which is used to transport and package the plurality of pods 12 of every brand and type.

The dispenser therefore uses a container 11, i.e., a vertical collector, suitable to provide a guide to the pods 12 which fall by gravity.

Having a plurality of magnets, said support 10 is suitable to engage on any vertical metal surface.

A frame 13, 18 is used to facilitate the connection of said support 10 to said container 11, the particular shape of the frame facilitates the passage of the capsules 12, thus avoiding any overturning or hitches.

The frame 13, 18 is composed of a sliding sub-frame 13 which, together with a fixed sub-frame 18, determines the lower internal section of the dispenser, thus ensuring the possibility of accommodating capsules 12 of different types and with different geometries.

Below said sliding sub-frame 13 and said fixed sub-frame 18, a tray 14 is installed, suitable to allow the extraction of the first pod 12 of the vertical pile.

said tray 14 is advantageously adapted to be moved away from, or towards said frame 13, 18 by using a stem 20, suitable to vary the length thereof by using a plurality of rails, for the purpose of accommodating and facilitating the dispensing of pods 12 of different sizes.

with reference to Figure 2, the components determining the support 10, which are part of the magnetic dispenser of the invention, are described.

In order to accommodate a plurality of pods 12 within said dispenser, it is necessary to be able to modify the internal volume of said frame 13, 18, thus facilitating the dispensing of pods 12 of sizes different from each other.

A sliding sub-frame 13 is suitable to engage with a fixed sub-frame 18, by using a plurality of rails. The sliding of said sub-frames 13, 18 is facilitated by the presence of a pair of springs 17, suitable to push said sliding sub-frame 13 towards the outside.

The tray 14, installed below said sub-frames 13, 18, is therefore suitable to receive the first of the pods 12 stacked above, inside the container 11.

However, if the sizes of the pods 12 change, it becomes further necessary to adjust the distance of said tray 14 from said frame 13, 18, for the purpose of allowing a convenient and practical pick-up of the first pod 12.

The distance between said tray 14 and said frame 13, 18, is adjusted by using a stem 20, which may be adjusted in length by using a female rail 16, installed at the rear of said tray 14. said female rail 16 is suitable to engage with a compatible male rail 15, installed at the rear of said fixed sub-frame 18.

Finally, it is clear that modifications, additions or variations which are obvious to a person skilled in the art may be made to the invention described up to now, without thereby departing from the scope of protection provided by the appended claims.

## Claims

1. Magnetic drop-down pods (12) dispenser
to dispense a plurality of pods (12) by means of a support (10) provided with magnets, suitable to keep said pods (12) separate and recognisable from each other; said support (10) constituting a single vertical system once combined with a generic commercial container (11) of said pods (12), further allowing to keep all the information related to the contained pods (12), reported on said container (11); said support (10) comprising a frame (13, 18) in the upper part and a tray (14) in the lower part; said pods (12) being suitable to fall by gravity from the container (11) and to reach, passing through the frame (13, 18), the tray (14), replacing the pod (12) previously extracted; said magnetic drop dispenser comprising:
- at least a container (11), made of any rigid material, suitable for storing inside it the plurality of vertically stacked pods (12); said container (11) being a generic commercial packaging used for transporting and marketing said pods (12);
- at least an adjustable frame (13, 18) suitable for engaging within the lower section of said vertically stacked container (11), thereby conferring the function of a structural element to said commercial container (11) of pods (12), and thus extending the life of said packaging; said frame (13, 18) being composed of a sliding sub-frame (13) and a fixed sub-frame (18), for the purpose of offering a dimensional range to contain within said dispenser, pods (12) of different sizes, determining the lower internal section of said dispenser; said fixed sub-frame (18) further comprising a male rail (15) suitable to facilitate the distancing of said tray (14) from the frame (13, 18); **characterized in that** it further comprises
- at least a tray (14), installed inferiorly and axially corresponding to said frame (13, 18), suitable to support the weight of the pods (12) stacked above, facilitating the exposure of the lowest capsule (12) and allowing its removal for use; said tray (14) further comprising raised sides, suitable to prevent the pods (12) from rolling outwardly; said tray (14) further comprising a female rail (16), suitable to match with a male rail (15) installed on said fixed sub-frame (18), in order to modify the distance of said tray (14) from said frame (13, 18)
- at least a stem (20), suitable for connecting said tray (14) with said frame (13, 18), thereby determining the distance between said tray (14) and said frame (13, 18); said stem (20) being suitable for being adjustable and therefore being composed of a male rail (15) and a female rail (16) suitable for sliding one upon the other;
- a plurality of magnets, installed at the rear of said stem (20), suitable to bind the entire dispenser, subject matter of the invention, to any vertical metal surface, thereby optimising the space requirement and further offering the possibility of modulating the present dispenser with a plurality of other dispensers of the same type;
- at least a chamfer, installed in the lower part of said tray (14), suitable to facilitate, by a slight inclination of said dispenser, the detachment of said magnets.

2. Magnetic drop-down pods (12) dispenser, according to the preceding claim 1, **characterised in that** said container (11) is made of a recycled plastic material such as polyethylene terephthalate (PET) for the purpose of maintaining a low environmental impact during industrial production, further facilitating the view inside said dispenser due to the characteristic transparency of polyethylene terephthalate.

3. Magnetic drop-down pods (12) dispenser, according to any one of the preceding claims, **characterised in that** the length of said stem (20) is suitable to be modified by means of a threaded joint, arranged internally to the walls of said stem (20), and being suitable to be unscrewed or screwed, consequently modifying the length of said stem (20).

4. Magnetic drop-down pods (12) dispenser, according to any of the preceding claims 1 to 2, **characterised in that** the length of said stem (20) is determined by the length chosen by the user, by exploiting a telescopic structure of said stem (20) which is suitable to comprise at least two external walls overlapping each other.

5. Magnetic drop-down pods (12) dispenser, according to any one of the preceding claims, **characterised in that** a plurality of magnets are installed inferiorly to said tray (14), for the purpose of increasing the stability of said support (10) when resting on a horizontal surface and facilitating the cooperation of several dispensers by realising a single multiple dispenser.

6. Magnetic drop-down pods (12) dispenser , according to any one of the preceding claims, **characterised in that** the distance between said sliding sub-frame (13) and said fixed sub-frame (18) is adjusted by means of two male rails comprising one bending tooth each, these rails, upon assembly, are able to click on the corresponding end teeth on the female rails, preventing the complete removal of the sliding sub-frame.

7. Magnetic drop-down pods (12) dispenser, according to the preceding claim 6, **characterised in that** a pair of springs (17) is installed within the rails of the fixed sub-frame (18), in order to move the sliding subframe (13) away from the fixed sub-frame (18), so as to adopt a sufficient volume for pods (12) of different sizes.

8. Magnetic drop-down pods (12) dispenser, according to any one of the preceding claims, **characterised in that** the sides of said frame (13, 18) are arched in order to optimise the transit of the pods (12), and to increase the stability of the coupling between the container (11) and the support (10); a further perimeter step outside said frame (13, 18) determines the portion of the frame (13, 18) which is apt to overlap inside the container (11) itself.

9. Magnetic drop-down pods (12) dispenser, according to any one of the preceding claims, **characterised in that** said frame (13, 18) is fixed, so it is apt to simply maintain its size, facilitating the manufacturing steps during industrial production.

## Patentansprüche

1. Magnetischer Spender für nach unten fallende Pods (12) zum Ausgeben mehrerer Pods (12) mittels einer mit Magneten versehenen Stütze (10), die geeignet ist, die Pods (12) voneinander getrennt und erkennbar zu halten; wobei die Stütze (10) ein einzelnes vertikales System bildet, sobald sie mit einem generischen handelsüblichen Behälter (11) für die Pods (12) kombiniert ist, und es des Weiteren erlaubt, alle Informationen bezüglich der enthaltenen Pods (12), die auf dem Behälter (11) angegeben sind, beizubehalten; wobei die Stütze (10) einen Rahmen (13, 18) im oberen Teil und eine Schale (14) im unteren Teil umfasst; wobei die Pods (12) geeignet sind, durch Schwerkraft aus dem Behälter (11) zu fallen und, durch den Rahmen (13, 18) hindurch, die Schale (14) zu erreichen und so den zuvor entnommenen Pod (12) zu ersetzen; wobei der magnetische Fallspender umfasst:
- mindestens einen Behälter (11), der aus einem beliebigen starren Material hergestellt ist und geeignet ist, in seinem Inneren mehrere vertikal gestapelte Pods (12) aufzubewahren; wobei der Behälter (11) eine generische handelsübliche Verpackung ist, die für den Transport und die Vermarktung der Pods (12) verwendet wird;
- mindestens einen verstellbaren Rahmen (13, 18), der geeignet ist, den unteren Querschnitt des vertikal gestapelten Behälters (11) in Eingriff zu nehmen, wodurch dem handelsüblichen Behälter (11) mit Pods (12) die Funktion eines Strukturelements verliehen wird und somit die Lebensdauer der Verpackung verlängert wird; wobei der Rahmen (13, 18) aus einem verschiebbaren Unterrahmen (13) und einem ortsfesten Unterrahmen (18) zusammengesetzt ist, um einen Abmessungsbereich zum Aufnehmen von Pods (12) unterschiedlicher Größe innerhalb des Spenders bereitzustellen und so den unteren inneren Querschnitt des Spenders zu bestimmen; wobei der ortsfeste Unterrahmen (18) des Weiteren eine Einschubschiene (15) umfasst, die geeignet ist, die Beabstandung der Schale (14) von dem Rahmen (13, 18) zu ermöglichen;
**dadurch gekennzeichnet, dass** er des Weiteren umfasst:
- mindestens eine Schale (14), die unterhalb des Rahmens (13, 18) und diesem axial entsprechend installiert ist und dafür geeignet ist, das Gewicht der darüber gestapelten Pods (12) zu stützen, und die das Freilegen des untersten Pods (12) ermöglicht und seine Entnahme zum Gebrauch erlaubt; wobei die Schale (14) des Weiteren erhöhte Seiten umfasst, die geeignet sind zu verhindern, dass die Pods (12) herausrollen; wobei die Schale (14) des Weiteren eine Aufnahmeschiene (16) aufweist, die dafür geeignet ist, mit einer Einschubschiene (15) zusammenzupassen, die an dem ortsfesten Unterrahmen (18) installiert ist, um die Distanz der Schale (14) von dem Rahmen (13, 18 zu modifizieren,
- mindestens eine Stange (20), die geeignet ist, die Schale (14) mit dem Rahmen (13, 18) zu verbinden und dadurch die Distanz zwischen der Schale (14) und dem Rahmen (13, 18) zu bestimmen; wobei die Stange (20) geeignet ist, verstellbar zu sein und daher aus einer Einschubschiene (15) und einer Aufnahmeschiene (16) zusammengesetzt ist, die geeignet sind, aneinander zu gleiten;
- mehrere Magnete, die an der Rückseite der Stange (20) installiert sind und geeignet sind, den gesamten Spender, der den Gegenstand der Erfindung bildet, an einer beliebigen vertikalen Metallfläche anzubringen, wodurch der Platzbedarf optimiert wird und des Weiteren die Möglichkeit geboten wird, den vorliegenden Spender mit mehreren anderen Spendern desselben Typs zu modulieren;
- mindestens eine Abschrägung, die im unteren Teil der Schale (14) installiert ist und geeignet ist, durch eine geringfügige Neigung des Spenders das Ablösen der Magnete zu erleichtern.

2. Magnetischer Spender für nach unten fallende Pods (12) nach dem vorangehenden Anspruch 1, **dadurch gekennzeichnet, dass** der Behälter (11) aus einem recycelten Kunststoffmaterial wie zum Beispiel Polyethylenterephthalat (PET) hergestellt ist, um während der industriellen Produktion eine geringe Umweltbelastung zu gewährleisten, wobei des Weiteren die Sicht ins Innere des Spenders dank der charakteristischen Transparenz von Polyethylenterephthalat ermöglicht wird.

3. Magnetischer Spender für nach unten fallende Pods (12) nach einem der vorangehenden Ansprüche, **dadurch gekennzeichnet, dass** die Länge der Stange (20) geeignet ist, mittels einer Gewindeverbindung modifiziert zu werden, die im Inneren der Wände der Stange (20) angeordnet ist und dafür geeignet ist, auseinandergeschraubt oder zusammengeschraubt zu werden, wodurch die Länge der Stange (20) modifiziert wird.

4. Magnetischer Spender für nach unten fallende Pods (12) nach einem der vorangehenden Ansprüche 1 und 2, **dadurch gekennzeichnet, dass** die Länge der Stange (20) durch die vom Benutzer gewählte Länge bestimmt wird, indem eine teleskopische Struktur der Stange (20) zunutze gemacht wird, die geeignet ist, mindestens zwei einander überlappende Außenwände zu umfassen.

5. Magnetischer Spender für nach unten fallende Pods (12) nach einem der vorangehenden Ansprüche, **dadurch gekennzeichnet, dass** mehrere Magnete unterhalb der Schale (14) installiert sind, um die Stabilität der Stütze (10) zu erhöhen, wenn sie auf einer horizontalen Fläche aufliegt, und das Zusammenwirken mehrerer Spender zu unterstützen, indem ein einzelner Mehrfachspender realisiert wird.

6. Magnetischer Spender für nach unten fallende Pods (12) nach einem der vorangehenden Ansprüche, **dadurch gekennzeichnet, dass** die Distanz zwischen dem verschiebbaren Unterrahmen (13) und dem ortsfesten Unterrahmen (18) mittels zweier Einschubschienen verstellt wird, die jeweils einen sich biegenden Zahn umfassen, wobei diese Schienen beim Zusammenbau in der Lage sind, in die entsprechenden Endzähne der Aufnahmeschienen einzurasten, wodurch das vollständige Entfernen des verschiebbaren Unterrahmens verhindert wird.

7. Magnetischer Spender für nach unten fallende Pods (12) nach dem vorangehenden Anspruch 6, **dadurch gekennzeichnet, dass** ein Paar Federn (17) innerhalb der Schienen des ortsfesten Unterrahmens (18) installiert ist, um den verschiebbaren Unterrahmen (13) von dem ortsfesten Unterrahmen (18) fort zu bewegen, damit ein ausreichendes Volumen für Pods (12) unterschiedlicher Größen gebildet wird.

8. Magnetischer Spender für nach unten fallende Pods (12) nach einem der vorangehenden Ansprüche, **dadurch gekennzeichnet, dass** die Seiten des Rahmens (13, 18) gewölbt sind, um den Durchgang der Pods (12) zu optimieren und die Stabilität der Kopplung zwischen dem Behälter (11) und der Stütze (10) zu erhöhen; wobei eine weitere umfänglich verlaufende Stufe außerhalb des Rahmens (13, 18) den Abschnitt des Rahmens (13, 18) bestimmt, der geeignet ist, im Inneren des Behälters (11) selbst zu überlappen.

9. Magnetischer Spender für nach unten fallende Pods (12) nach einem der vorangehenden Ansprüche, **dadurch gekennzeichnet, dass** der Rahmen (13, 18) ortsfest ist, so dass er dafür geeignet ist, seine Größe einfach beizubehalten, was die Herstellungsschritte bei der industriellen Produktion vereinfacht.

## Revendications

1. Distributeur de capsules (12) de chute magnétique pour distribuer une pluralité de capsules (12) au moyen d'un support (10) muni d'aimants, adapté pour maintenir lesdites capsules (12) séparées et reconnaissables les unes des autres ; ledit support (10) constituant un système vertical unique une fois combiné avec un récipient commercial générique (11) desdites capsules (12), permettant en outre de conserver toutes les informations relatives aux capsules (12) contenues, rapportées sur ledit récipient (11) ; ledit support (10) comprenant un cadre (13, 18) en partie supérieure et un plateau (14) en partie inférieure ; lesdites capsules (12) étant adaptés pour tomber par gravité du récipient (11) et à atteindre, en traversant le cadre (13, 18), le plateau (14), en remplaçant la capsule (12) précédemment extraite ; ledit distributeur de chute magnétique comprenant :
- au moins un récipient (11), en tout matériau rigide, adapté pour stocker, dans celui-ci, la pluralité de capsules empilées verticalement (12) ; ledit récipient (11) étant un emballage commercial générique utilisé pour le transport et la commercialisation desdites capsules (12) ;
- au moins un cadre ajustable (13, 18) adapté pour se mettre en prise dans la section inférieure dudit récipient empilé verticalement (11), conférant ainsi la fonction d'un élément structurel audit récipient commercial (11) de capsules (12), et prolongeant ainsi la durée de vie dudit emballage ; ledit cadre (13, 18) étant composé d'un sous-cadre coulissant (13) et d'un sous-cadre fixe (18), dans le but de proposer une plage dimensionnelle pour contenir, dans ledit distributeur, des capsules (12) de tailles différentes, déterminant la section interne inférieure dudit distributeur ; ledit sous-cadre fixe (18) comprenant en outre un rail mâle (15) adapté pour faciliter l'écartement dudit plateau (14) du cadre (13, 18) ; **caractérisé en ce qu'**il comprend en outre
- au moins un plateau (14), installé en partie inférieure et correspondant axialement audit cadre (13, 18), adapté pour supporter le poids des capsules (12) empilées dessus, facilitant l'exposition de la capsule (12) la plus basse et permettant son retrait pour utilisation ; ledit plateau (14) comprenant en outre des côtés surélevés, adaptés pour empêcher les capsules (12) de rouler vers l'extérieur ; ledit plateau (14) comprenant en outre un rail femelle (16), adapté pour correspondre à un rail mâle (15) installé sur ledit sous-cadre fixe (18), afin de modifier la distance dudit plateau (14) par rapport audit cadre (13, 18)
- au moins une tige (20), adaptée pour relier ledit plateau (14) audit cadre (13, 18), déterminant ainsi la distance entre ledit plateau (14) et ledit cadre (13, 18) ; ladite tige (20) étant adaptée pour être ajustable et donc composée d'un rail mâle (15) et d'un rail femelle (16) adaptés pour coulisser l'un sur l'autre ;
- une pluralité d'aimants, installés à l'arrière de ladite tige (20), adaptés pour lier l'ensemble du distributeur, objet de l'invention, à toute surface métallique verticale, optimisant ainsi l'encombrement et proposant en outre la possibilité de moduler le présent distributeur avec une pluralité d'autres distributeurs du même type ;
- au moins un biseau, installé dans la partie inférieure dudit plateau (14), adapté pour faciliter, par une légère inclinaison dudit distributeur, le détachement desdits aimants.

2. Distributeur de capsules (12) de chute magnétique selon la revendication précédente 1, **caractérisé en ce que** ledit récipient (11) est réalisé en un matériau plastique recyclé tel que le polytéréphtalate d'éthylène (PET) dans le but de maintenir un faible impact environnemental pendant la production industrielle, facilitant en outre la vue à l'intérieur dudit distributeur en raison de la transparence caractéristique du polytéréphtalate d'éthylène.

3. Distributeur de capsules (12) de chute magnétique selon l'une quelconque des revendications précédentes, **caractérisé en ce que** la longueur de ladite tige (20) est adaptée pour être modifiée au moyen d'un joint fileté, agencé à l'intérieur des parois de ladite tige (20), et étant adapté pour être dévissé ou vissé, modifiant par conséquent la longueur de ladite tige (20).

4. Distributeur de capsules (12) de chute magnétique selon l'une quelconque des revendications 1 et 2, **caractérisé en ce que** la longueur de ladite tige (20) est déterminée par la longueur choisie par l'utilisateur, en exploitant une structure télescopique de ladite tige (20) qui est adaptée pour comprendre au moins deux parois externes se chevauchant l'une l'autre.

5. Distributeur de capsules (12) de chute magnétique selon l'une quelconque des revendications précédentes, **caractérisé en ce qu'**une pluralité d'aimants sont installés en dessous dudit plateau (14), dans le but d'augmenter la stabilité dudit support (10) lorsqu'il repose sur une surface horizontale et de faciliter la coopération de plusieurs distributeurs en réalisant un seul distributeur multiple.

6. Distributeur de capsules (12) de chute magnétique selon l'une quelconque des revendications précédentes, **caractérisé en ce que** la distance entre ledit sous-cadre coulissant (13) et ledit sous-cadre fixe (18) est ajustée au moyen de deux rails mâles comprenant chacun une dent de flexion, ces rails étant aptes, lors de l'assemblage, à s'encliqueter sur les dents d'extrémité correspondantes sur les rails femelles, empêchant le retrait complet du sous-cadre coulissant.

7. Distributeur de capsules (12) de chute magnétique selon la revendication 6 précédente, **caractérisé en ce qu'**une paire de ressorts (17) sont installés à l'intérieur des rails du sous-cadre (18) fixe, afin d'éloigner le sous-cadre (13) coulissant du sous-cadre (18) fixe, de manière à adopter un volume suffisant pour des capsules (12) de tailles différentes.

8. Distributeur de capsules (12) de chute magnétique, selon l'une quelconque des revendications précédentes, **caractérisé en ce que** les côtés dudit cadre (13, 18) sont arqués afin d'optimiser le transit des capsules (12), et d'augmenter la stabilité du couplage entre le récipient (11) et le support (10) ; un autre pas de périmètre à l'extérieur dudit cadre (13, 18) détermine la partie du cadre (13, 18) qui est apte à se chevaucher à l'intérieur du récipient (11) proprement dit.

9. Distributeur de capsules (12) de chute magnétique selon l'une quelconque des revendications précédentes, **caractérisé en ce que** ledit cadre (13, 18) est fixe, de sorte qu'il est adapté à simplement maintenir sa taille, facilitant les étapes de fabrication lors de la production industrielle.
